# NEUE EUROPÄISCHE PATENTSCHRIFT

(11) **EP 2 532 409 B2**
(45) Veröffentlichungstag und Bekanntmachung des Hinweises auf die Entscheidung über den Einspruch: **10.01.2024**
(45) Hinweis auf die Patenterteilung: 14.02.2018
(21) Anmeldenummer: 12170654.3
(22) Anmeldetag: 04.06.2012
(51) Int. Cl.: B01D 46/52

(54) **Farbnebelabscheidepapiergelegefiltermodul**
Paint mist separator with multilayer paper filter module
Séparateur de brouillard de peinture avec un module de filtre à papier multicouches

(30) Priorität: 08.06.2011 DE 102011050915
(43) Veröffentlichungstag der Anmeldung: 12.12.2012
(73) Patentinhaber: Neufilter GmbH, 48599 Gronau (DE)
(72) Erfinder: Neumann, Jens, 48599 Gronau (DE)
(74) Vertreter: Kather, Peter

(56) Entgegenhaltungen:
- WO-A2-03/084638
- DE-A1- 2 508 187
- DE-A1-102009 034 863
- NL-A- 9 101 369
- US-A- 5 500 271
- anonymous: "SPRAY CABIN FILTRATION PRODUCTS", farbige Broschüre - Columbus Industries, 3 March 2004 (2004-03-03),
- "SPRAY BOOTH FILTRATION PRODUCTS", Farbige Broschüre der Firma Columbus Industries, June 2000 (2000-06),
- Anonymous: "Overspray Collection Products", Columbus Industries, 1989,

## Beschreibung

Farbnebelabscheidepapiergelegefiltermodul und Farbnebelabscheidepapiergelegefiltermodulwand aus einer Mehrzahl derartiger Farbnebelabscheidepapiergelegefiltermodule. Die vorliegende Erfindung betrifft ein Farbnebelabscheidepapiergelegefiltermodul. Filter, also Filtermatten oder Filtervliese, und auch Filtermodule, also Einheiten mit solchen Matten oder Vliesen, sind an sich bekannt. Des Weiteren hat z.B. das Unternehmen Brainflash Patententwicklungs GmbH Lienz, Österreich einen unter der Marke Edrizzi vermarkteten Farbnebelabscheider entwickelt, bei dem sich aus einem brandhemmendem Karton durch Falttechnik eine Filterbox mit einer im Vergleich zur Frontfläche der Box großen Gesamtfläche ergibt. Es handelt sich allerdings hier nicht wirklich um einen Filter, sondern um einen Abscheider, nämlich einen Farbnebelabscheider, wie dies auch von dem entwickelnden Unternehmen ausdrücklich zum Ausdruck gebracht wird, denn lediglich die Oberfläche des Kartons ist zur Aufnahme von Farbnebeln wirksam. Dadurch, dass der Karton mehrfach gefaltet ist, ergibt sich eine im Vergleich zur Frontfläche der "Filter"box große Abscheidefläche.

Aus der WO 03/084638 A ist ein Filtermodul bekannt, das in Anströmrichtung gleichsam zweigeteilt ist und einen vorn liegenden ersten Abschnitt und einen dahinter liegenden zweiten Abschnitt aufweist. Im zweiten Abschnitt befindet sich Filtermaterial. Der erste Abschnitt wird durch gefaltete, aber in sich starre Kartonflächen gebildet. Die Kartonflächen weisen eine Vielzahl von Öffnungen auf, die von Kartonfläche zu Kartonfläche kleiner werden und von Kartonfläche zu Kartonfläche gegeneinander versetzt sind. Dieser Abschnitt des bekannten Filtermoduls ist ein Beispiel für den oben erwähnten Farbnebelabscheider.

Aus der DE 25 08 187 A und der NL 9 101 369 A sind Filtereinrichtungen mit einem äußeren Rahmen, einer dreidimensional angeordneten Filterbahn aus Papier oder ähnlichem faserigen Werkstoff und Abstandshaltern zwischen einzelnen Abschnitten der Filterbahn bekannt.

Eine Aufgabe der vorliegenden Erfindung besteht ausgehend von bekannten Farbnebelabscheidern, z.B. dem Farbnebelabscheider der oben genannten Art, darin, ein weiteres, insbesondere verbessertes Filtermodul anzugeben.

Diese Aufgabe wird mit einem im folgenden mitunter kurz als Papiergelegefiltermodul bezeichneten Farbnebelabscheidepapiergelegefiltermodul mit den Merkmalen des Anspruchs 1 gelöst. Dazu ist bei einem Farbnebelabscheidepapiergelegefiltermodul ein äußerer Rahmen und ein dreidimensional angeordneter Papiergelegefilter mit zwischen einzelnen Abschnitten des Papiergelegefilters angeordneten Abstandshaltern vorgesehen. Die Verwendung eines Papiergelegefilters vergrößert die wirksame Fläche des Filtermoduls oder des Farbnebelabscheidemoduls beträchtlich.

Ein Papiergelegefilter wird aus mehreren Papierbahnen gebildet, in denen sich jeweils Öffnungen befinden, wobei die Anzahl der Öffnungen von Papierbahn zu Papierbahn zunimmt, insbesondere progressiv zunimmt, so dass z.B. bei einem Papiergelegefilter mit zum Beispiel acht Papierbahnen eine erste Bahn vergleichsweise große Öffnungen aufweist, sich dann sukzessive bei jeder weiteren Bahn kleinere Öffnungen ergeben, bis schließlich bei der achten Bahn die kleinste Öffnungsgröße, aber auch die größte Anzahl von Öffnungen auf einem Flächenabschnitt der Papierbahn erreicht ist. Papiergelegefilter sind mit unterschiedlichen Anzahlen von Papierbahnen bekannt und die konkrete Anzahl der Papierbahnen ist für das hier vorgeschlagene Papiergelegefiltermodul nebensächlich. Jedenfalls soll die Bezugnahme auf einen Papiergelegefilter einen Papiergelegefilter mit einer Mehrzahl von Papierbahnen, also zwei oder mehr Papierbahnen, umfassen.

Papiergelegefilter sind an sich bekannt und z.B. bei der Columbus Industries, Inc., Ashville, Ohio, USA erhältlich. Ein Kennzeichen von Papiergelegefiltern, das dem hier und im Folgenden als Papiergelegefiltermodul bezeichneten Filtermodul zugute kommt, ist deren progressiver
Aufbau, so dass sämtliche Lagen des Papiergelegefilters als Abscheidefläche wirksam sind. Damit erhöht sich die z.B. zur Farbnebelabscheidung wirksame Fläche im Vergleich zum Oberflächenabschnitt um ein Vielfaches. Auf einem Oberflächenabschnitt von einem Quadratmeter ergibt sich bei einem Papiergelegefilter mit acht Papierbahnen z.B. eine wirksame Oberfläche in der Größenordnung von dreißig Quadratmetern. Papiergelegefilter werden insofern bisher flächig, also z.B. nach Art eines "Vorhangs" oder "Wandbehangs" genutzt.

Der Vorteil des erfindungsgemäßen Papiergelegefiltermoduls besteht damit speziell in dessen im Vergleich zu bisherigen Modulen deutlich erhöhter Farbaufnahme- und Farbabscheidefähigkeit. Das Papiergelegefiltermodul ist darüber hinaus leicht herzustellen, wie im Folgenden noch erläutert werden wird. Bei einer besonderen Ausführungsform, nämlich wenn der Rahmen des Papiergelegefiltermoduls aus Karton, nämlich insbesondere Wellpappe oder dergleichen, gebildet ist, ist das Modul insgesamt ausgesprochen leicht und kann deshalb leicht an den jeweiligen Bestimmungsort verbracht und genauso leicht am Bestimmungsort angebracht werden.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Indem bei dem Papiergelegefiltermodul der Papiergelegefilter in dem Rahmen in Form einer mehrfach gefalteten Bahn mit jeweils zwischen einzelnen Bahnabschnitten befindlichen Abstandshaltern angebracht ist, ergibt sich eine durchgehende Filter- oder Abscheidefläche und eine einfache Herstellbarkeit des Papiergelegefiltermoduls, indem für diesen nur ein Papiergelegefilter (eine Papiergelegefilterbahn) erforderlich ist, der zum Anbringen in dem Rahmen mehrfach gefaltet wird.

Wenn der oder jeder Abstandshalter eine dreidimensionale Struktur aufweist, ergibt sich ein definierter Abstand zwischen den jeweils einander zugewandten Bahnabschnitten des Papiergelegefilters. In diese Abstände kann z.B. mit Farbnebel belastete Luft eindringen, so dass die gesamte Tiefe des Papiergelegefiltermoduls zur Farbnebelabscheidung wirksam ist. Als Abstandshalter mit einer dreidimensionalen Struktur kommt z.B. ein sägezahnförmig strukturiertes, insbesondere gefaltetes Pappelement oder ein entsprechendes Kunststoff- oder Metallelement in Betracht. Die Spitzen der jeweiligen, insbesondere sägezahnförmigen Struktur sind den jeweils gegenüberliegenden Seiten des Papiergelegefilters zugewandt. Eine Längserstreckung der so gebildeten jeweiligen, insbesondere sägezahnförmigen Struktur verläuft entlang der sich im Betrieb ergebenden Strömungsrichtung, so dass ein Eindringen von mit Farbnebelresten belasteter Luft in die Gesamttiefe des Papiergelegefiltermoduls möglich ist.

Wenn der Abstandshalter aus einer netzartig verstrebten Struktur, insbesondere Kunststoffstruktur, gebildet ist, ist einerseits die Wirksamkeit als Abstandshalter gegeben, so dass zwischen je zwei einander zugewandten Seiten des Papiergelegefilters stets ein Abstand verbleibt. Andererseits ergeben sich weitere Vorteile. Die netzartig verstrebte Struktur ist dabei nämlich derart, dass sich in der Struktur einzelne Verbindungsstellen ergeben, an denen jeweils zumindest zwei Kunststoffstege, -streben oder dergleichen aufeinander stoßen, so dass sich räumliche Gebilde, nämlich z.B. Tetraeder, Prismen und/oder Würfel, usw. ergeben. Im Vergleich zu z.B. einer flächigen Struktur wie die oben beschriebene sägezahnförmige Struktur, hat die netzartig verstrebte Struktur den Vorteil, dass ein Luftdurchtritt in verschiedene Richtungen möglich ist und dass die die Struktur bildenden Stege, soweit sie zumindest abschnittweise quer zur sich im Betrieb ergebenden Luftströmung verlaufen, zu deren Verwirbelung wirksam sind, so dass sich eine effektive Farbabscheidung ergibt. Diese ist z.B. durch die mit der Verwirbelung einhergehende Reduktion der Geschwindigkeit des Luftstroms gegeben, wobei die Verwirbelung auch dazu führt, dass ein Farbniederschlag auf solchen Flächenabschnitten des Papiergelegefilters stattfindet, die sich quer zur ansonsten vorherrschenden Luftströmung befinden.

In einer besonderen Ausführungsform zeichnet sich das Papiergelegefiltermodul durch einen in seiner Außen- und Innenkontur quaderförmigen, insbesondere würfelförmigen äußeren Rahmen aus. Das quaderförmige/würfelförmige Innenvolumen nimmt den dreidimensional angeordneten Papiergelegefilter zusammen mit den Abstandshaltern in einem Passsitz auf. Der Rahmen weist auf einer ersten Seite und auf einer der ersten Seite gegenüberliegenden zweiten Seite jeweils eine Öffnung auf. Dadurch, dass der Rahmen den Papiergelegefilter mitsamt den dazwischen befindlichen Abstandshaltern in einem Passsitz aufnimmt, sind keine besonderen Maßnahmen zur Fixierung des Papiergelegefilters in dem Rahmen erforderlich. Indem der Rahmen auf einer ersten und einer gegenüberliegenden zweiten Seite jeweils eine Öffnung aufweist, ergeben sich Öffnungen für den z.B. mit Farbnebel belasteten Luftstrom, wobei eine Öffnung als Einströmöffnung für mit Farbpartikeln oder dergleichen belastete Luft fungiert und wobei die gegenüberliegende zweite Öffnung als Ausströmöffnung für von Farbpartikeln oder dergleichen befreite oder zumindest weitestgehend befreite Luft fungiert. Im Anschluss an die zweite Öffnung, also stromabwärts des Filtermoduls, kann noch ein separater Filter, zum Beispiel eine Filtermatte oder ein Filtervlies vorgesehen sein, zum Beispiel an der Rückseite des Filtermoduls angebracht sein.

Bei einem Papiergelegefiltermodul mit einer mehrfach gefalteten Bahn des Papiergelegefilters und dazwischen befindlichen Abstandshaltern ergeben sich alternierend Taschen und Buge in der gefalteten Bahn des Papiergelegefilters. Bei einer besonderen Ausführungsform des Papiergelegefiltermoduls ist vorgesehen, dass diese dreidimensionale Struktur des Papiergelegefilters jeweils mit ihren Taschen und Bugen den im Rahmen gebildeten Öffnungen zugewandt ist. Damit ergibt sich die größtmögliche Filter- oder Abscheidefläche, indem nämlich mit Schwebstoffen oder dergleichen belastete Luft einerseits auf einzelne Buge auftritt, in ihrer Mehrheit jedoch in die Taschen eindringt und dort entlang der gesamten Tiefe des Papiergelegefiltermoduls mit einzelnen Oberflächenabschnitten des Papiergelegefilters in Kontakt kommen kann und sich bei einem solchen Kontakt auf einem Oberflächenabschnitt des Papiergelegefilters, nämlich einem Oberflächenabschnitt einer Lage des Papiergelegefilters, niederschlägt.

Diese Orientierung der dreidimensionalen Struktur des Papiergelegefilters hat auch den Vorteil, dass es auf der gesamten Außenoberfläche des Papiergelegefiltermoduls keinen Abschnitt gibt, an dem belastete Luft direkt durch das Modul hindurchtreten kann, ohne dabei gleichzeitig auch durch einen Abschnitt des Papiergelegefilters hindurchtreten zu müssen. Wenn man die hier beschriebene Orientierung der dreidimensionalen Struktur des Papiergelegefilters mit seinen Bugen und Taschen als nach vorne und nach hinten ausgerichtet auffassen will und entsprechend die in dem Rahmen des Papiergelegefiltermoduls gebildeten Öffnungen als nach vorne und nach hinten weisend auffasst, ergibt sich eine weniger günstige Orientierung der dreidimensionalen Struktur des Papiergelegefilters, wenn die Buge und die Taschen jeweils nach oben und nach unten weisen. Bei einer Ausrichtung nach oben und nach unten ist nämlich abschnittsweise ein ungehinderter Durchtritt der belasteten Luft durch das Papiergelegefiltermodul möglich und es ergibt sich damit eine ungenügende Abscheidung.

Bei einer Anordnung des Filters, bei der die Taschen und Buge jeweils zu den anderen Seiten des Rahmens weisen, liegt die Flächenabschnitts des Papiergelegefilters quer zur Strömungsrichtung der Luft so dass ein erster, in Strömungsrichtung vorne liegender Abschnitt entsprechend schnell gesättigt ist, während in Strömungsrichtung hinter diesem Flächenabschnitt liegende weitere Abschnitte noch kaum als Abscheider wirksam geworden sind. Dennoch ist ein Austausch des Moduls notwendig, sobald durch die in Strömungsrichtung vorne liegende Fläche aufgrund der anhaftenden, abgeschiedenen Farbpartikel der Luftstrom nicht mehr oder nur noch ungenügend hindurchtreten kann. Bei dieser Ausrichtung findet also zwar eine vollständige oder im Wesentlichen vollständige Farbnebelabscheidung statt, allerdings ist die Standzeit des Filtermoduls deutlich reduziert.

Insoweit ist die beschriebene Ausführungsform, bei der sich die Situation ergibt, dass innerhalb der gefalteten Struktur des Papiergelegefilters jeder zweite Bug und jede zweite Tasche der Einströmöffnung des Papiergelegefiltermoduls zugewandt ist, eine günstigere Situation.

Die Buge oder Taschen, wobei ein Bug auf seiner "Rückseite" quasi jeweils eine Tasche bildet und entsprechend eine Tasche an ihrem Ende und deren Rückseite einen Bug ausbildet, so dass die Begriffe auch ausgetauscht werden können, eignen sich besonders zur Verbindung des Papiergelegefilters mit dem Rahmen, so dass sich eine besondere Ausführungsform des Papiergelegefiltermoduls durch eine Verbindung zwischen dem Papiergelegefilter und dem Rahmen jeweils im Bereich einzelner Taschen/Buge auszeichnet. Für eine derartige Verbindung kommen Kunststoffnieten in Betracht. Alternativ kann die Verbindung zwischen dem Papiergelegefilter und dem Rahmen auch durch Vernähen, Verkleben oder Klettverbindungen und dergleichen erfolgen. Eine solche Verbindung zwischen Papiergelegefilter und dem umgebenden Rahmen verbessert die an sich aufgrund des Passsitzes bereits ausreichende Halterung des Papiergelegefilters in dem Rahmen, der sich ergibt, indem der Papiergelegefilter in seiner dreidimensionalen Struktur zusammen mit den Abstandshaltern ein im Vergleich zum Innenvolumen des Rahmens geringfügig größeres Volumen einnimmt, so dass ein Einsetzen des Papiergelegefilters in seiner dreidimensionalen Struktur in den Rahmen nur möglich ist, indem der Papiergelegefilter auf die Abstandshalter gepresst wird und indem der Papiergelegefilter an seinen langen Seiten an die Innenwände des Rahmens gedrückt wird.

Bei einer Ausführungsform des Papiergelegefiltermoduls ist vorgesehen, dass der Rahmen für die Öffnungen eine Perforation aufweist. Dann besteht die Möglichkeit, dass der Rahmen erst am Verwendungsort geöffnet wird, so dass ein evtl. bereits darin befindlicher Papiergelegefilter bis zur Öffnung des Rahmens normalerweise nicht mit mit Schwebstoffen oder dergleichen belasteter Luft in Kontakt kommt, so dass der Verwender des Papiergelegefiltermoduls die komplette Standzeit des Papiergelegefilters für seine Anwendungssituation ausnutzen kann.

Eine Mehrzahl von Papiergelegefiltermodulen der hier und nachfolgend beschriebenen Art lässt sich zu einer Papiergelegefiltermodulwand kombinieren, indem mehrere Papiergelegefiltermodule durch Anreihen und/oder Stapeln, also durch eine direkte Anreihung jeweils horizontal oder vertikal benachbarter Module, kombiniert werden. So ergibt sich z.B. eine Papiergelegefiltermodulwand mit neun Papiergelegefiltermodulen, indem drei Reihen von Papiergelegefiltermodulen durch Anreihen jeweils dreier Papiergelegefiltermodule gebildet werden und indem diese drei Reihen sukzessive aufeinander gestapelt werden. Auf diese Weise lässt sich die wirksame Filter- oder Abscheidefläche linear quasi beliebig erhöhen, indem eine Mehrzahl von Papiergelegefiltermodulen verwendet wird. Wenn diese Papiergelegefiltermodule durch Anreihen und/oder Stapeln so aneinander angrenzend kombiniert werden, dass sich eine Papiergelegefiltermodulwand ergibt, sind übliche Anwendungsfälle abgedeckt, bei denen in einer Lackiererei oder dergleichen normalerweise eine Stützkonstruktion in Form eines Metallrahmens oder dergleichen vorgesehen ist, an denen bisher Filtermatten oder Filtervliese aufgehängt wurden oder in die Abscheideboxen der eingangs genannten Art zusammen mit in Strömungsrichtung dahinter erforderlichen Vliesen oder Filtermatten eingesetzt wurden. In eine solche nunmehr nur noch hinsichtlich ihrer Funktion als äußerer Rahmen erforderliche Konstruktion können unmittelbar eine Mehrzahl der hier vorgeschlagenen Papiergelegefiltermodule eingesetzt werden, so dass sich die beschriebene Papiergelegefiltermodulwand ergibt, die unmittelbar und bei der Mehrzahl der Anwendungsfälle ohne zusätzliche Hilfsmittel, wie stromabwärts angebrachte Filtermatten, verwendbar ist.

Bei einem (nicht beanspruchten) Verfahren zur Herstellung eines Papiergelegefiltermoduls wie hier und nachfolgend beschrieben ist vorgesehen, dass eine Papiergelegefilterbahn vorgegebener Länge von einer Rolle oder dergleichen abgenommen wird, dass beginnend bei einem Ende der abgenommenen Papiergelegefilterbahn auf diese ein Abstandshalter aufgelegt wird, dass die Papiergelegefilterbahn umgeschlagen wird, so dass der umgeschlagene Teil der Papiergelegefilterbahn auf dem soeben positionierten Abstandshalter zu liegen kommt, also auf die bisher freie Seite des Abstandshalters gelegt wird, dass ein weiterer Abstandshalter fluchtend mit der Papiergelegefilterbahn und dem ersten Abstandshalter aufgelegt wird und diese Schritte fortgesetzt werden, bis das andere Ende der Papiergelegefilterbahn erreicht ist und dass der Papiergelegefilter mit der so erhaltenen, mehrfach gefalteten Bahn und den jeweils zwischen einzelnen Bahnabschnitten befindlichen Abstandshaltern in den Rahmen eingesetzt wird. Dieses Herstellungsverfahren ist einfach und kann ohne Weiteres auch von ungeschultem Personal ausgeführt werden. Das einfache Herstellungsverfahren ist einerseits aus Kostengründen attraktiv, wenn ein Anbieter des Papiergelegefiltermoduls wie hier und nachfolgend beschrieben vollständig "montierte" Papiergelegefiltermodule anbietet. Das einfache Herstellungsverfahren ist aber auch insofern vorteilhaft, als die "Montage" eines Papiergelegefiltermoduls ohne Weiteres und in kürzester Zeit am Verwendungsort erfolgen kann, so dass beim Transport der einzelnen Komponenten eines Papiergelegefiltermoduls nur deren Volumina in zusammengelegtem Zustand ins Gewicht fallen und damit auf einem Transportfahrzeug, z.B. einem Lastkraftwagen, im Vergleich zu "montierten" Papiergelegefiltermodulen eine erheblich größere Mehrzahl von Bestandteilen für solche Papiergelegefiltermodule transportiert werden können, so dass sich eine Transportkostenreduzierung ergibt.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten, Elemente und Kombinationen und/oder Materialien, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen für den Fachmann im Hinblick auf die Lösung der Aufgabe entnehmbar sind und durch kombinierbare Merkmale zu einem neuen Gegenstand führen.

Es zeigen
- FIG 1: ein Papiergelegefiltermodul zum Zeitpunkt der Kombination eines davon umfassten dreidimensional angeordneten Papiergelegefilters mit einem als Rahmen fungierenden Karton,
- FIG 2: eine nicht erfindungsgemäße Ausführungsform eines Papiergelegefiltermoduls und
- FIG 3: eine schematisch vereinfachte Darstellung von Papierlagen zum Erhalt eines Papiergelegefilters.

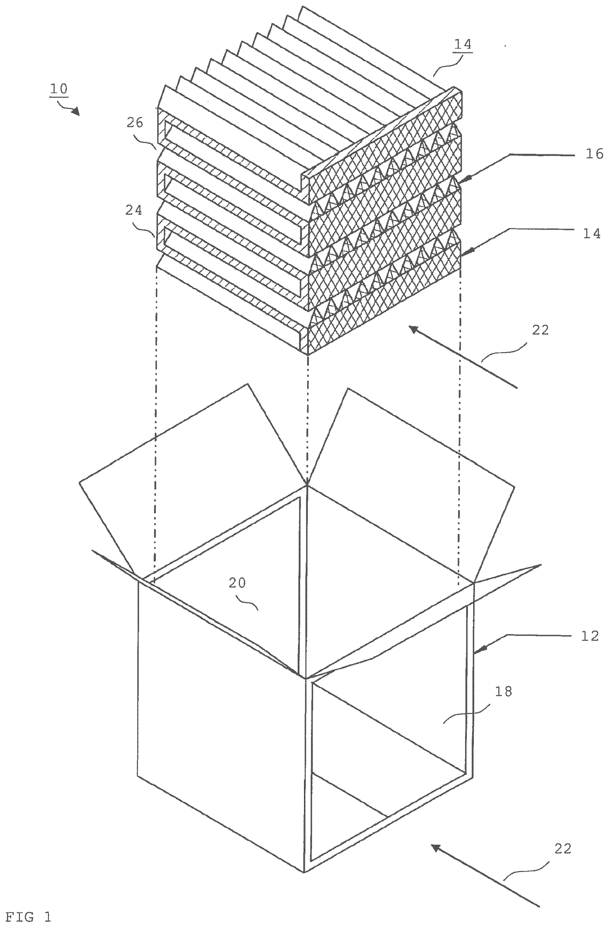

FIG 1 zeigt eine Ausführungsform eines Papiergelegefiltermoduls 10 während einer Momentaufnahme bei der Herstellung eines solchen Moduls. Das Papiergelegefiltermodul 10 umfasst einerseits einen äußeren Rahmen 12 und einen in dem Rahmen 12 dreidimensional angeordneten oder dreidimensional anordenbaren Papiergelegefilter 14 mit zwischen einzelnen Abschnitten des Papiergelegefilters 14 angeordneten Abstandshaltern 16. Der Rahmen 12 legt also die äußeren Abmessungen des Papiergelegefiltermoduls 10 und definiert die Geometrie des so gebildeten Filterkörpers 10. Die dreidimensionale Anordnung des Papiergelegefilters 14 ergibt sich beim dargestellten Ausführungsbeispiel indem eine den Papiergelegefilter 14 bildende Papiergelegefilterbahn mehrfach gefaltet oder umgewendet ist.

Bei der Darstellung in FIG 1 sind die Abstandshalter 16 als sägezahnförmig gefaltete Strukturelemente, z.B. aus Pappe, Kunststoff, Blech oder dergleichen, gezeigt. Wesentlich ist, dass sich bei dem dreidimensional angeordneten Papiergelegefilter 14 eine Situation ergibt, bei der durch eine im Rahmen 12 gebildete Öffnung 18 (erste Öffnung/Einströmöffnung 18 - zweite Öffnung/Ausströmöffnung 20) einströmende Luft großflächig entlang mehrer Oberflächenabschnitte des Papiergelegefilters 14 entlang streicht. Insofern sind die dargestellten Abstandshalter 16 mit ihrer sägezahnförmigen Struktur so ausgerichtet, dass sich parallel zur Strömungsrichtung 22 der durch das Papiergelegefiltermodul 10 strömenden Luft verlaufende Kanäle ergeben.

Andere Ausführungsformen von Abstandshaltern 16 sind ebenfalls denkbar, z.B. Abstandshalter mit einer netzartig verstrebten Struktur (nicht dargestellt), wobei sich zwischen den die Struktur bildenden Verstrebungen eine Vielzahl von quasi chaotisch verlaufenden Kanälen ergibt, so dass einerseits gewährleistet ist, dass die einströmende Luft großflächig entlang der Oberfläche des Papiergelegefilters 14 strömt und sich andererseits durch die Streben und die damit irregulär und in ständig wechselnden Richtungen verlaufenden Kanäle eine Verwirbelung der einströmenden Luft ergibt und sich so eine gute Abscheidung von mit der Luft mitgeführten Partikeln, z.B. Farbpartikeln, ergibt.

Dargestellt in FIG 1 ist eine Situation, bei der sich die dreidimensionale Struktur des Papiergelegefilters 14 ergibt, indem dieser in dem Rahmen 12 in Form einer mehrfach gefalteten oder umgelegten Bahn mit jeweils zwischen einzelnen Bahnabschnitten befindlichen Abstandshaltern 16 angebracht ist oder angebracht wird, wobei der Schritt der Anbringung des gefalteten Papiergelegefilters 14 in dem Rahmen 12 in FIG 1 durch die in Richtung auf den Rahmen 12 verlaufenen strichpunktierten Linien angedeutet ist. Bei einer dreidimensionalen Struktur des Papiergelegefilters 14, die durch eine mehrfache Faltung desselben erreicht wird, ergeben sich jeweils alternierend Buge 24 und Taschen 26 in dem Papiergelegefilter 14 (in den Figuren sind die Bezugsziffern nur auf der stromabwärts gerichteten Seite eingezeichnet; die Buge und Taschen befinden sich auch auf der der Strömungsrichtung 22 zugewandten Seite - soweit die Buge 24 mit scharfen Kanten und rechten Winkeln dargestellt sind, ist dies der schematisch vereinfachten zeichnerischen Darstellung geschuldet; normalerweise werden sich keine derart scharfen Kanten ausbilden, wenn die Papiergelegefilterbahn einfach mehrfach umgewendet wird; eine Papiergelegefiltermodul mit scharfen Kanten in der gefalteten Papiergelegefilterbahn ist gleichwohl möglich).

Hinsichtlich der Anbringung des gefalteten Papiergelegefilters 14 in dem Rahmen 12 ist vorgesehen, dass die beiden Seiten mit den Bugen 24 und den Taschen 26 jeweils den Seiten mit einer Öffnung 18, 20 im Rahmen 12 zugewandt sind, so dass bei einer als Einströmöffnung fungierenden ersten Öffnung 18 im Rahmen 12 dort eintretende Luft einerseits auf die in diese Richtung weisenden Buge 24 trifft, jedoch ansonsten in die Taschen 26 eintritt und dort entlang der gesamten Tiefe des Papiergelegefiltermoduls 10 mit der strukturierten und progressiven Oberfläche des Papiergelegefilters 14 in Kontakt kommt.

Die in die Taschen 26 eintretende Luft kommt also mit dem Papiergelegefilter 14 großflächig und zudem mit den von dem Papiergelegefilter 14 umfassten, mehreren Papierbahnen und der durch die darin befindlichen Öffnungen gebildeten um Größenordnungen erhöhten Oberfläche in Kontakt. Im Ergebnis ist diese gesamte vergrößerte Oberfläche z.B. zur Abscheidung von Farbpartikeln oder sonstigen Schwebstoffen wirksam. Dies erhöht die Standzeit des Papiergelegefilters 14 und damit die Verwendbarkeit des Papiergelegefiltermoduls 10 beträchtlich.

Als Material für den Rahmen 12 kommt Karton, Wellpappe oder Ähnliches in Betracht. Grundsätzlich kann der Rahmen 12 jedoch auch aus Kunststoff, Holz, Metall, usw. oder Kombinationen aller vorgenannten Materialien gebildet sein. Karton oder Pappe kommen wegen ihres geringen Gewichts besonders in Betracht und sind im Vergleich zu z.B. Kunststoff oder Metall als eher ressourcenschonend anzusehen, wenn nämlich nach einer gewissen Zeit einer Benutzung eines Filtermoduls 10 eine Entsorgung nicht nur des Papiergelegefilters 14, sondern auch des Rahmens 12 erforderlich ist. Bei einer Verwendung von Karton oder Pappe für den Rahmen 12 ergeben sich für das gesamte Modul 10 ähnliche oder identische Ausgangsstoffe, so dass auch eine Entsorgung des Moduls 10 als Einheit in Betracht kommt. Auch bei einer Verwendung von Papier oder Pappe für den Rahmen ist das Papiergelegefiltermodul 10 insgesamt ausreichend stabil, speziell wenn sich zwischen den Abschnitten des Papiergelegefilters 14 Abstandshalter 16 befinden. Auch wenn mehrere Papiergelegefiltermodule 10 übereinander gestapelt angebracht werden und sich deren Gewicht mit der Zeit aufgrund abgeschiedener Farbpartikel oder dergleichen erhöht, ist normalerweise keine zusätzliche Stützkonstruktion erforderlich und eine auf diese Weise gebildete Papiergelegefiltermodulwand ist selbsttragend.

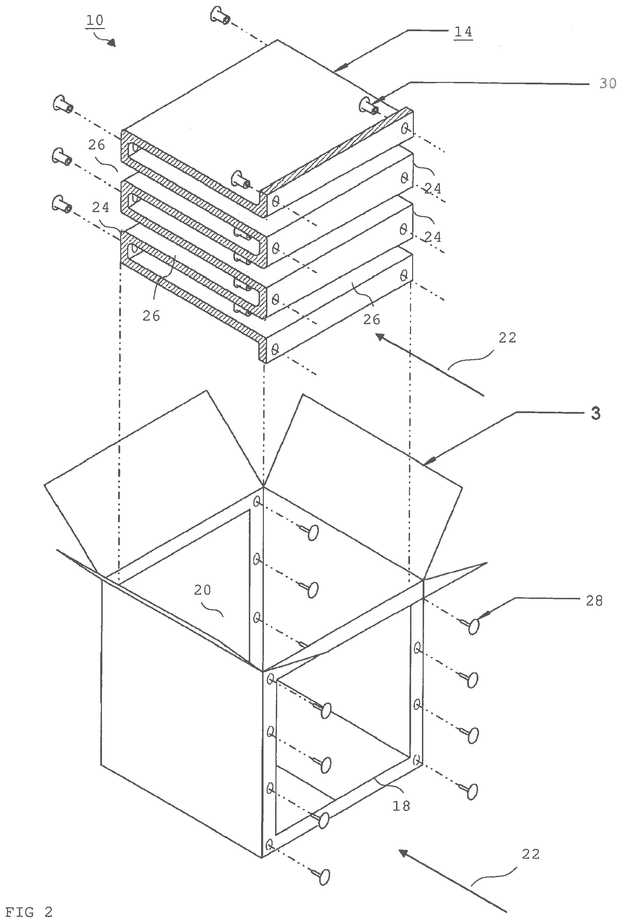

FIG 2 zeigt eine nicht erfindungsgemäße Ausführungsform eines Papiergelegefiltermoduls 10. Im Unterschied zur Ausführungsform gemäß FIG 1 sind hier keine Abstandshalter (16; FIG 1) notwendig. Der Abstand zwischen sich jeweils gegenüberliegenden Abschnitten des mehrfach gefalteten Papiergelegefilters 14 ergibt sich aufgrund einer Fixierung des Papiergelegefilters 14 im Bereich von Wendepunkten der mehrfach gefalteten Bahn - Buge 24 - am Rahmen 12. Dadurch, dass die Fixierung in regelmäßigen, gleich bleibenden Abständen erfolgt, bilden sich auch ohne Abstandshalter (16; FIG 1) Taschen 26 aus, in welche im Betrieb des Papiergelegefiltermoduls 10 einströmende Luft die gesamte Tiefe des Papiergelegefiltermoduls 10 erreicht. Als Mittel zum Bewirken einer solchen Verbindung/Fixierung sind Kunststoffnieten 28 und korrespondierende Kappen 30 gezeigt. Andere Verbindungsarten wie Nähen, Kleben, Klammern, Klettverbindungen, usw. kommen zusätzlich oder alternativ genauso in Betracht.

Eine Verbindung des Papiergelegefilters 14 mit dem Rahmen 12, also dessen Fixierung zumindest im Bereich der Buge 24 am Rahmen 12, kann auch zusätzlich zu der Verwendung der in FIG 1 gezeigten Abstandshalter 16 erfolgen. Dafür kann die in FIG 2 gezeigte Situation als Darstellung einer solchen Ausführungsform aufgefasst werden, bei der zur besseren Übersichtlichkeit der gefaltete Papiergelegefilter 14 ohne die normalerweise dazwischen befindlichen Abstandshalter (16; FIG 1) gezeigt ist. Insoweit geht es dann nämlich vornehmlich um die Illustration einer Möglichkeit zur Verbindung des dreidimensional angeordneten Papiergelegefilters 14 mit dem Rahmen 12. Gezeigt ist eine Verbindung zwischen dem Papiergelegefilter 14 und dem Rahmen 12 jeweils im Bereich einzelner Taschen 26 und/oder Buge 24 und als Mittel zum Bewirken einer solchen Verbindung sind Kunststoffnieten 28 und korrespondierende Kappen 30 gezeigt. Alternative Möglichkeiten zum Bewirken einer solchen Verbindung sind Verkleben, Vernähen, usw..

Anstelle der in FIG 1 und FIG 2 dargestellten Situation mit horizontal ausgerichteten Bugen 24 und Taschen 26 kommt genauso eine vertikale Ausrichtung der Buge 24 und Taschen 26 in Betracht.

Ein würfelförmiges Filtermodul 10, wie in den Figuren dargestellt hat zum Beispiel bei einer Kantenlänge von fünfzig Zentimetern nicht etwa eine wirksame Fläche von 50 x 50 cm2, also 0,25 m2, sondern tatsächlich (bei der dargestellten Anzahl von Faltungen) eine wirksame Fläche von 2,5 m2, die Größe der wirksamen Oberfläche ist aufgrund der Oberflächenstruktur des Papiergelegefilters noch deutlich höher, hängt aber von der Art des Papiergelegefilters, speziell von der Anzahl der von dem Papiergelegefilter umfassten Papierlagen, ab. Jedenfalls ist bereits angesichts der Gegenüberstellung der Flächenmaße 0,25 m2 und 2,5 m2 ersichtlich, wie die dreidimensionale Struktur des Papiergelegefilters 14 bei dem hier vorgeschlagenen Filtermodul 10 die Abscheideleistung erhöht. Zudem liegt eine übliche Speicherfähigkeit von niedergeschlagenen Farbpartikeln oder dergleichen bei einem achtlagigen Papiergelegefilter 14 in einer Größenordnung von 15kg/m2. Ein flächig und einlagig angebrachter Papiergelegefilter mit einer Seitenlänge von fünfzig Zentimetern, also einer Fläche von 0,25m2, kann also etwa 3,75kg an abgeschiedenen Farbpartikeln aufnehmen. Das hier vorgeschlagene Filtermodul 10 kann - bei gleichen seitlichen Abmessungen (50 x 50 cm) - aufgrund der auf 2,5m2 erhöhten wirksamen Abscheidefläche jedoch 37,5kg an abgeschiedenen Farbpartikeln aufnehmen, also die zehnfache Menge. Aufgrund der verzehnfachten Aufnahmemenge erhöht sich auch die Standzeit, also die Verwendbarkeit und Wirksamkeit eines dreidimensional angeordneten Papiergelegefilters 14 in einem Papiergelegefiltermodul 10 in Vergleich zu einem auf gleicher Oberfläche angebrachten flächigen Papiergelegefilter. Bei einem Papiergelegefilter 14 mit mehr oder weniger als acht Papierbahnen ergeben sich andere Verhältnisse, wobei die Aufnahmefähigkeit mit der Anzahl der Lagen steigt.

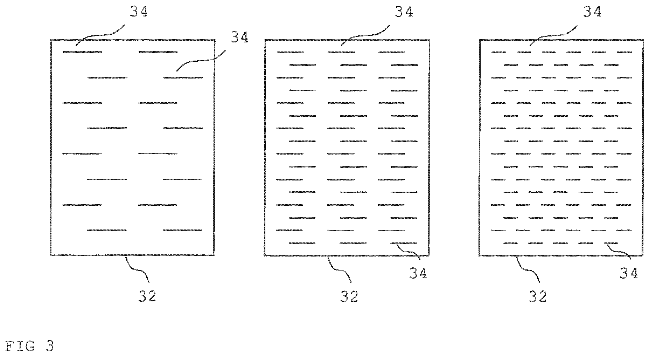

FIG 3 zeigt abschließend - allerdings stark schematisch vereinfacht - einzelne Lagen 32 für zum Beispiel einen Papiergelegefilter 14. Je nach dem Ausgangsmaterial der Lagen, also zum Beispiel Kunststoff oder Metall, kann sich auch ein Kunststoffgelegefilter, Metallgelegefilter, usw. ergeben, diese Materialien sind jedoch nicht von den Patentansprüchen umfasst. Die progressive Oberflächenstruktur eines solchen Gelegefilters ergibt sich durch unterschiedlich große Öffnungen in den einzelnen Lagen 32. Erfindungsgemäß werden solche unterschiedlich großen Öffnungen hergestellt, indem das jeweilige Material - wie die Darstellung in FIG 3 zu zeigen versucht - in regelmäßigen Abständen geschlitzt wird, wobei sich die Länge der Schlitze 34 und ggf. auch die Abstände der Schlitze 34 von Lage 32 zu Lage 32 unterscheidet. Wenn die jeweilige Lage 32 dann in Längsrichtung, also quer zu den eingebrachten Schlitzen 34 gedehnt wird, öffnen sich die Schlitze 34 und es entstehen Löcher in der Oberfläche der jeweiligen Lage 32. Durch die Dehnung der Lage 32 richtet sich das zwischen den Schlitzen 34 befindliche Material teilweise auf, so dass die vorher nur oder im wesentlichen nur zweidimensionale Lage 32 auch eine Ausdehnung in die dritte Dimension erfährt. Beim Aufeinanderlegen mehrerer Lagen 32 ergibt sich aufgrund dieser zusätzlichen Ausdehnung in die dritte Dimension ein Abstand und eine Berührung der einzelnen Lagen 32 nur an vergleichsweise wenigen Stellen, so dass von jeder Lage 32 deren vollständige Oberfläche oder zumindest im wesentlichen die vollständige Oberfläche als Abscheidefläche wirksam werden kann.

Nicht dargestellt, jedoch auch ohne explizite Darstellung ohne Weiteres ersichtlich, ist, dass eine Mehrzahl von Papiergelegefiltermodulen 10 durch Anreihen und/oder Stapeln zu einer Papiergelegefiltermodulwand kombinierbar ist. Eine solche Papiergelegefiltermodulwand kann, insbesondere ohne zwischen den Modulen 10 befindliche Strukturen, zum Beispiel in eine Rahmenstruktur eingebracht werden. Eine besonders einfache Situation ergibt sich dabei, indem die Module 10 jeweils sukzessive nebeneinander auf einem unteren Abschnitt einer solchen Rahmenstruktur oder dem Boden abgestellt werden und dass sodann jeweils auf einer sich so ergebenden Reihe von Modulen 10 durch nochmaliges Aneinanderreihen weiterer Module 10 jeweils neue Reihen gebildet werden, bis schließlich die Rahmenstruktur ausgefüllt ist. Grundsätzlich kommt auch die Bildung einer Papiergelegefiltermodulwand ohne jegliche Rahmenstruktur in Betracht, wenn die ersten Papiergelegefiltermodule am Boden platziert werden und wenn später eine sinnvolle Fixierung der äußeren und/oder oberen Papiergelegefiltermodule erfolgt oder möglich ist.

Einzelne im Vordergrund stehende Aspekte der hier eingereichten Beschreibung lassen sich damit kurz wie folgt zusammenfassen: Angegeben werden ein Farbnebelabscheidepapiergelegefiltermodul 10 und eine aus mindestens zwei Farbnebelabscheidepapiergelegefiltermodulen 10 gebildete Farbnebelabscheidepapiergelegefiltermodulwand, wobei das Farbnebelabscheidepapiergelegefiltermodul 10 einen äußeren Rahmen 12 und darin einem dreidimensional angeordneten Papiergelegefilter 14 mit zwischen einzelnen Abschnitten des Papiergelegefilters 14 angeordneten Abstandshaltern 16 umfasst.

### Bezugszeichenliste

- 10: Papiergelegefiltermodul
- 12: Rahmen
- 14: Papiergelegefilter
- 16: Abstandshalter
- 18: (erste) Öffnung
- 20: (zweite) Öffnung
- 22: Strömungsrichtung
- 24: Bug (des Papiergelegefilters)
- 26: Tasche (im Papiergelegefilter)
- 28: Kunststoffniet
- 30: Kappe
- 32: Lage (eines Papiergelegefilters)
- 34: Schlitz (in einer Lage eines Papiergelegefilters)

## Patentansprüche

1. Farbnebelabscheidepapiergelegefiltermodul (10) mit
einem äußeren Rahmen (12) und
einem dreidimensional angeordneten Filter und
zwischen einzelnen Abschnitten des Filters zur Gewährleistung eines Abstands zwischen einander zugewandten Seiten des Filters angeordneten Abstandshaltern (16),
**dadurch gekennzeichnet,**
**dass** der dreidimensional angeordnete Filter ein Papiergelegefilter (14) ist, der in dem Rahmen (12) in Form einer mehrfach gefalteten Papiergelegefilterbahn mit jeweils zwischen einzelnen Bahnabschnitten befindlichen Abstandshaltern (16) angebracht ist,
wobei das Papiergelege eine Mehrzahl von aufeinanderliegenden Papierbahnen umfasst und eine progressive Oberflächenstruktur aufweist, die sich dadurch ergibt, dass in den einzelnen Papierbahnen jeweils unterschiedlich große Öffnungen gebildet sind und indem jede Papierbahn in regelmäßigen Abständen quer zur Längsrichtung geschlitzt ist und sich die Länge der Schlitze (34) von Lage (32) zu Lage (32) unterscheidet,
wobei jede Papierbahn quer zu den eingebrachten Schlitzen (34) gedehnt ist und sich durch die Dehnung das zwischen den Schlitzen (34) befindliche Material teilweise aufrichtet und diese so eine Ausdehnung in die dritte Dimension erfährt,
wobei sich beim Aufeinanderlegen mehrerer Papierbahnen aufgrund dieser zusätzlichen Ausdehnung in die dritte Dimension ein Abstand und eine Berührung der einzelnen Papierbahnen nur an vergleichsweise wenigen Stellen ergibt.

2. Farbnebelabscheidepapiergelegefiltermodul (10) nach Anspruch 1, wobei der oder jeder Abstandshalter (16) eine dreidimensionale Struktur aufweist.

3. Farbnebelabscheidepapiergelegefiltermodul (10) nach Anspruch 2, wobei der Abstandshalter aus einer netzartig verstrebten Struktur, insbesondere Kunststoffstruktur, gebildet ist.

4. Farbnebelabscheidepapiergelegefiltermodul (10) nach einem der vorangehenden Ansprüche mit einem in seiner Außen- und Innenkontur quaderförmigen, insbesondere würfelförmigen, äu-ßeren Rahmen (12), dessen Innenvolumen den dreidimensional angeordneten Papiergelegefilter (14) mit den Abstandshaltern (16) in einem Passsitz aufnimmt, wobei der Rahmen auf einer ersten Seite und auf einer der ersten Seite gegenüberliegenden zweiten Seite jeweils eine Öffnung (18, 20) aufweist.

5. Farbnebelabscheidepapiergelegefiltermodul (10) nach Anspruch 1 und Anspruch 4, wobei sich aufgrund der mehrfach gefalteten Papiergelegefilterbahn des Papiergelegefilters (14) in diesem alternierend Taschen (26) und Buge (24) ergeben und wobei die dreidimensionale Struktur des Papiergelegefilters (14) jeweils mit ihren Taschen (26) und Bugen (24) den in dem Rahmen (12) gebildeten Öffnungen (18, 20) zugewandt ist.

6. Farbnebelabscheidepapiergelegefiltermodul (10) nach Anspruch 5, mit einer Verbindung zwischen dem Papiergelegefilter (14) und dem Rahmen (12) jeweils im Bereich einzelner Taschen (26) und/oder Buge (24).

7. Farbnebelabscheidepapiergelegefiltermodul (10) nach einem der Ansprüche 5 oder 6, wobei der Rahmen (12) für die Öffnungen (18, 20) eine Perforation aufweist.

8. Farbnebelabscheidepapiergelegefiltermodul (10) nach einem der vorangehenden Ansprüche, mit einem aus Pappe, insbesondere Wellpappe, gebildeten Rahmen (12).

9. Farbnebelabscheidepapiergelegefiltermodulwand mit einer Mehrzahl von Farbnebelabscheidepapiergelegefiltermodulen (10) nach einem der vorangehenden Ansprüche, wobei mehrere Farbnebelabscheidepapiergelegefiltermodule (10) durch Anreihen und/oder Stapeln kombinierbar sind.

## Claims

1. A paint mist separating multilayer paper filter module (10) comprising
an outer frame (12) and
a filter arranged three-dimensionally, and
spacers (16) arranged between individual sections of the filter to ensure a distance between facing surfaces of the filter,
**characterized in that**
the filter, arranged three-dimensionally, is a multilayer paper filter (14), which is installed in the frame (12) in the form of a multilayer paper filter sheet folded several times, having spacers (16) situated between individual sections of the sheet,
wherein the multilayer paper comprises a plurality of sheets of paper situated one above the other and is provided with a progressive surface structure, which is due to the fact that openings of different sizes are formed in the individual sheets of paper and by each sheet of paper being slit at regular intervals transversally to the longitudinal direction, and the length of each slit (34) differs from one layer (32) to the next layer (32),
wherein each sheet of paper is stretched transversally to the slits (34) thereby created and the material between the slits (34) is partially oriented upwards because of the stretch and so the said sheet of paper undergoes a stretch in the third dimension,
wherein when laying several sheets of paper one above the other, on account of this additional stretch in the third dimension a distance results and the individual sheets of paper touch at comparatively few locations.

2. The paint mist separating multilayer paper filter module (10) according to claim 1,
wherein the/each spacer (16) has a three-dimensional structure.

3. The paint mist separating multilayer paper filter module (10) according to claim 2,
wherein the spacer is formed from a structure having struts in the form of a network, in particular a plastic structure.

4. The paint mist separating multilayer paper filter module (10) according to any one of the preceding claims, having an outer frame (12), which is box-shaped, in particular cube-shaped, in its outer and inner contours, its internal volume accommodating the three-dimensionally arranged multilayer paper filter (14) together with the spacers (16) in a snug fit, wherein the frame has an opening (18,20) on a first side and on a second side opposite the first side.

5. The paint mist separating multilayer paper filter module (10) according to claim 1 and claim 4, wherein pockets (26) and bows (24), which alternate with one another, are formed because of the repeatedly folded multilayer paper filter sheet of the multilayer paper filter (14), and wherein the three-dimensional structure of the multilayer paper filter (14) together with its respective pockets (26) and bows (24) faces the openings (18, 20) formed in the frame (12).

6. The paint mist separating multilayer paper filter module (10) according to claim 5,
comprising a connection between the multilayer paper filter (14) and the frame (12), each in the region of individual pockets (26) and/or bows (24).

7. The paint mist separating multilayer paper filter module (10) according to any one of claims 5 or 6, wherein the frame (12) has perforations for the openings (18, 20).

8. The paint mist separating multilayer paper filter module (10) according to any one of the preceding claims, comprising a frame (12) made of cardboard, in particular corrugated board.

9. A paint mist separating multilayer paper filter module wall with a plurality of paint mist separating multilayer paper filter modules (10) according to any one of the preceding claims, wherein multiple paint mist separating multilayer paper filter modules (10) can be combined in rows and/or stacks.

## Revendications

1. Module de filtre à papier multicouches à séparation de brouillard de peinture (10) comprenant
un cadre extérieur (12) et
un filtre disposé en trois dimensions et
des entretoises (16) disposés entre des parties individuelles du filtre pour ménager une distance entre des côtés du filtre qui se font face,
**caractérisé en ce que**
le filtre disposé en trois dimensions est un filtre à papier multicouches (14) qui est placé dans le cadre (12) sous la forme d'une bande de filtre à papier multicouches, pliée plusieurs fois, qui comporte des entretoises (16) situées chacune entre des parties de bande individuelles,
le papier mullicouches comprenant une pluralité de bandes de papier disposées les unes sur les autres et comportant une structure de surface progressive qui résulte du fait que des ouvertures de différentes tailles sont formées dans chacune des bandes de papier individuelles et **en ce que** chaque bande de papier est fendue à intervalles réguliers transversalement à la direction longitudinale et les fentes (34) ont des longueurs différentes d'une couche (32) à l'autre (32),
chaque bande de papier étant étirée transversalement aux fentes (34) ménagées et la matière située entre les fentes (34) se redressant partiellement en raison de l'étirement et cette bande de papier subissant ainsi un étirement dans la troisième dimension,
une distance et un contact des bandes de papier individuelles n'étant obtenus qu'en des emplacements relativement peu nombreux lorsque plusieurs bandes de papier sont superposées en raison de cet étirement supplémentaire dans la troisième dimension.

2. Module de filtre à papier multicouches à séparation de brouillard de peinture (10) selon la revendication 1, l'entretoise ou chaque entretoise (16) comportant une structure tridimensionnelle.

3. Module de filtre à papier multicouches à séparation de brouillard de peinture (10) selon la revendication 2, l'entretoise étant formée d'une structure étançonnée de manière réticulaire, en particulier d'une structure en matière plastique.

4. Module de filtre à papier multicouches à séparation de brouillard de peinture (10) selon l'une des revendications précédentes, comprenant un cadre extérieur (12) qui a une forme parallélépipédique, notamment cubique, quant à ses contours extérieur et intérieur et dont le volume intérieur reçoit suivant un ajustement serré le filtre à papier multicouches (14) disposé en trois dimensions et pourvu des entretoises (16), le cadre comportant une ouverture (18, 20) sur un premier côté et sur un deuxième côté opposé au premier côté.

5. Module de filtre à papier multicouches à séparation de brouillard de peinture (10) selon la revendication 1 et la revendication 4, du fait que la bande du filtre à papier multicouches (14) est pliée plusieurs fois, des poches (26) et des pointes (24) étant formées de manière alternée dans ledit filtre et la structure tridimensionnelle du filtre à papier multicouches (14) étant dirigée, à chaque fois avec ses poches (26) et ses pointes (24), vers les ouvertures (18, 20) formées dans le cadre (12).

6. Module de filtre à papier multicouches à séparation de brouillard de peinture (10) selon la revendication 5, comprenant une liaison entre le filtre à papier multicouches (14) et le cadre (12) à chaque fois au niveau de poches (26) et/ou de pointes (24) individuelles.

7. Module de filtre à papier multicouches à séparation de brouillard de peinture (10) selon l'une des revendications 5 ou 6, le cadre (12) comportant pour les ouvertures (18,20) une perforation.

8. Module de filtre à papier multicouches à séparation de brouillard de peinture (10) selon l'une des revendications précédentes, comprenant un cadre (12) formé en carton, en particulier en carton ondulé.

9. Paroi de module de filtre à papier multicouches à séparation de brouillard de peinture comportant une pluralité de modules de filtre à papier multicouches à séparation de brouillard de peinture (10) selon l'une des revendications précédentes, plusieurs modules de filtre à papier multicouches à séparation de brouillard de peinture (10) pouvant être combinées sous forme de rangées et/ou de piles.
